Europäisches Patentamt

**European Patent Office**

**Office européen des brevets**

(19)

(11) Publication number: **0 148 719**
**A1**

(12)

# EUROPEAN PATENT APPLICATION

(21) Application number: **84630172.9**

(22) Date of filing: **14.11.84**

(51) Int. Cl.⁴: **C 08 K 5/34,** C 08 L 79/08

(30) Priority: **14.11.83 US 550784**

(43) Date of publication of application: **17.07.85**
**Bulletin 85/29**

(84) Designated Contracting States: **BE DE FR GB IT NL SE**

(71) Applicant: **ROGERS CORPORATION, Main Street, Rogers, Conn. 06263 (US)**

(72) Inventor: **Frayer, Paul D., Bunny Lane, Brooklyn Connecticut 06234 (US)**

(74) Representative: **Meyers, Ernest et al, Office de Brevets Freylinger & Associés 46 rue du Cimetière B.P. 1153, L-1011 Luxembourg (LU)**

(54) **High temperature polyimide processing aid.**

(57) A high temperature processing aid for melt processing polyimide polymers and a method of doing same wherein a pyrrolidone based high boiling point solvent is added to a polyimide polymer in amounts sufficient to lower the glass transition temperature of said polyimide.

EP 0 148 719 A1

## " High temperature polyimide processing aid "

As is known, the melt processing of highly aromatic polyimides is extremely difficult in that one usually experiences a degradation of the polymer in that its softening temperature exceeds its thermal stability.  Such polyimides include homopolymers and copolymers such as polyamide-imides, polyester-imides, polyimide amide-imides and the like as well as blends of such polyimides providing they are sufficiently linear to be melt processed.

By definition, melt processing means the application of pressure and temperature for some time period to cause a plasticized polymer to flow.  Flow in this context implies deformation of the material beyond that achieved by the same processing condition applied to an unplasticized polymer.

Accordingly, it is an object of the present invention to provide a non-reactive, high temperature processing aid as a plasticizer for rendering predominantly linear aromatic polyimides melt processible.

It is another object of the present invention to provide a  processing aid for predominantly linear polyimides which is inexpensive to use and is compatible with injection molding techniques.

According to the invention, there is provided a high temperature processing aid for melt processing polyimide polymers comprising a pyrrolidone based solvent having a boiling point of at least about $250^{\circ}$ C.

There is also provided a method of preparing polyimide polymers for melt processing comprising combining said polyimide polymer with a pyrrolidone based solvent in      an amount sufficient to lower the glass transition  temperature of said polyimide polymer, said pyrrolidone based solvent having a boiling point of at least about $250^{\circ}$ C.

As is known in the art, the processing of polyimides is difficult in that, in general, polyimides have a relatively narrow processing temperature window. In other words, the softening temperature and the temperature at which thermal degradation takes place are relatively close. As a rule of thumb, it has been suggested that for processing amorphous polymers the melt temperature should be in the range of $Tg + 80$ to $100^{\circ}$ C for compression molding, $Tg + 100$ to $125^{\circ}$ C for screw extrusion and $Tg + 125$ to $150^{\circ}$ C for injection molding . Since thermal instability of polyimides begins to occur at about $375^{\circ}$ C, depending on time of exposure, polyimides having a $Tg$ above about $275^{\circ}$ C cannot be melt processed by the more common methods.

As an example of the above, a polyimide sold commercially as PI-2080 by UpJohn Corporation has an atmospheric pressure $Tg$ of about $310^{\circ}$ C. In that as a rule, maximum processing temperature has been found to be only $370^{\circ}$ C, commercial products ( solid shapes ) based on PI-2080 are presently made by atypical, time consuming processing methods such as :

1. low pressure compression molding with cycle times of many hours,
2. ram extrusion at fractional rates of normal polymer profile screw extrusion rates, and
3. sintering of high pressure, low temperature formed shapes analogous to powder metallurgy.

In each case, high viscosity prevents fast processing.

In the present invention, thermal stabilizers in amounts of from 0,25 % to about 5,0 % by weight are optionally used to increase the maximum temperature for processing so as to further reduce the viscosity and to plasticize the polyimide with a high boiling point, compatible fluid. Preferably, such stabilizers are of high molecular weight and low volatility. Examples of useful thermal stabilizers are the hindered amine types such as Naugard 445 by Uniroyal Corp, phosphite types such as Naugard PHR by Uniroyal Corp,

-3-

and the phenolic types such as Goodrite 3114 by B.F. Goodrich Corp. In this regard, compatibility is important for polymer viscosity reduction and for increasing the inherent boiling point of the plasticizer within the polyimide matrix. The final Tg of the polymer/plasticizer system depends on the quantity of plasticizer remaining which is a function of processing history. Preferably, the final Tg should be above the continuous use temperature which is typically about $260^{\circ}$ C.

While thermal stabilizers do, in fact, broaden the processing window for polyimides, they do not, by themselves, permit fast polyimide processing in that even at $410^{\circ}$ C the viscosity of the polymers are about two orders of magnitude too high.

In order to meet the desired processing temperature and avoid thermal degradation, it has been found that the addition of a high boiling point solvent plasticizes the polyimide and allows the depression of the Tg of the polyimide so as to permit melt processing thereof without causing excessive gaseous release of the solvent. Thus, such a solvent plasticizer while aiding in processing does not substantially reduce the key properties of the polyimide polymer at room temperature or at temperatures up to $250^{\circ}$ C .

With regard to the above, it has been found that pyrrolidone based high boiling point solvents such as N-cyclohexyl-2-pyrrolidone ( CHP ) and diaminopropyl pyrrolidone ( DAPP ) when employed with a polyimide do, in fact, depress the Tg of the polymer to such a point as to permit melt processing without thermal degradation.

In the present invention, the term polyimide is meant to include homopolymers and copolymers such as polyimide-imides, polyamide-imides, polyester-imides, polyimide-amide-imides and the like as well as blends of such polyimides providing they are sufficiently linear so as to be melt processed, crosslinking possibly occurring subsequent to shaping.

Further, it has been found that the amount of high boiling point solvent/plasticizer to be used should be from about 1 % to about 10 % by weight, preferably from about 3 % to about 10 % by weight.

The following examples are given to further illustrate the present invention.

In order to demonstrate the effect of the pyrrolidone based high boiling point solvents on the Tg of polyimides, a series of differential scanning calorimetry (DSC) tests were made on the polyimide polymer PI-2080 manufactured by UpJohn Corporation which has been modified in the following ways :

    a.  By the addition of 3 %, 5 % and 10 % by weight of N-cyclohexyl -2-pyrrolidone (CHP) solvent ;

    b.  by the addition of 3 % by weight of diaminopropylpyrrolidone ;

    c.  by the addition of 3 % by weight N-cyclohexyl-2-pyrrolidone plus 10 % by weight dimethyl formamide ;

    d.  by the addition of 3 % by weight N-cyclohexyl-2-pyrrolidone plus a thermal stabilizer and a heat cycle.

In this testing, all samples of the PI-2080 polyimide were prepared using dimethylformamide and/or acetone as a volatile diluent for the addition of the solvent to aid dispersion into the polymeric powder. Accordingly, about 10 grams of powder and an equal amount of acetone were mixed to which was added the appropriate amount of additive which was also reduced with an equal amount of acetone. This mixture was placed in a hood and allowed to stand overnight to allow the acetone to evaporate and to allow the additive to diffuse into the polymer powder particles. The heating rate for the DSC was $10^{\circ}$ C/minute. The _normal_ boiling point of dimethylformamide (DMF) is relatively low compared to the pyrrolidones, 155$^O$ C vs about 284$^O$ C for CHP. Thus, drying at elevated temperature near or above the boiling point of the DMF but below the boiling point of the pyrrolidone effectively removes the DMF. Interactions between the pyrrolidones and polyimides have been found to increase the _effective_ boiling point of the pyrrolidone which then allows a higher processing temperature for the polyimide.

| Example no. | | Tg ($^O$C) |
|---|---|---|
| 1. | PI-2080 | 305-310 (as received) |
| 2. | PI-2080, 10 % CHP Air dried | 245 |
| 3. | PI-2080, 3 % CHP Air dried | 255 |
| 4. | PI-2080, 3 % DAPP Heated and cooled | 270 |
| 5. | PI-2080, 3 % CHP Oven dried | 290 |
| 6. | PI-2080,3 % CHP Dried at 200$^O$ C | 300 |
| 7. | PI-2080, 3 % CHP Dried at 250$^O$ C | 300 |
| 8. | PI-2080, 5 % CHP Dried at 250$^O$ C | 300 |
| 9. | PI-2080, 3 % CHP 1.0 % stabilizer Dried at 250$^O$ C | 300 |
| 10. | PI-2080, 3 % CHP 10 % DMF | 220 |
| 11. | PI-2080, 3 % CHP Dried 1 hr at 150$^O$ C | 265 |
| 12. | PI-2080, 3 % CHP 10 % DMF Dried 1 hr at 200$^O$ C | 295 |

From the DSC testing in general and from the chart given above, it is noted that the pyrrolidone based solvents effectively reduces the Tg of the polyimide polymers and the amount used determines the Tg which can range from about 245$^O$ C to 300$^O$ C.

The following examples are provided to show the value of depressing the Tg of a polyimide with a pyrrolidone based solvent so that the polyimide may be melt processed ; e.g., compression molded.

In the following examples, PI-2080 polyimide in powder form was molded at three different temperatures to obtain some measure of the processing window as judged by the amount of flow. Additionally, samples containing 3 % and 10 % N-cyclohexyl-2-pyrrolidone which was added before molding were also prepared. In each case, the powder was compression molded between Kapton film release sheets and sandwiched between steel plates.

In each test example, the results of which are summarized below, a sample of about 6 grams was used and the molding temperature was reached generally in less than 15 minutes under a ram load force 44482 N.

| Exam. # | % CHP | Temp. $^{\circ}$C | Area cm$^2$ | Press $10^5$ PA | Flowability cm$^2$/$10^5$ PA |
|---|---|---|---|---|---|
| 12 | 0 | 327 | 5,54 | 802 | 0,007 |
| 13 | 3 | 327 | 9,50 | 464 | 0,020 |
| 14 | 0 | 383 | 34,2 | 130 | 0,26 |
| 15 | 3 | 383 | 36,84 | 120 | 0,30 |
| 16 | 10 | 383 | 53,55 | 83 | 0,65 |
| 17 | 0 | 411 | 31,68 | 140 | 0,23 |
| 18 | 3 | 411 | 27,81 | 160 | 0,17 |
| 19 | 10 | 411 | 34,90 | 127 | 0,27 |

As will be noted from the above, the presence of the N-cyclohexyl-2-pyrrolidone improves the flowability of the polyimide polymer during compression molding. Further, as the content of the CHP is increased at constant temperature, flowability is also increased. Processing at too high a temperature may cause a decrease in flowability due to degradation.

-7-

CLAIMS

1. A high temperature processing aid for melt processing polyimide polymers comprising a pyrrolidone based solvent having a boiling point of at least about 250° C.

2. A processing aid as claimed in claim 1, wherein said pyrrolidone based high boiling point solvent is N-cyclohexyl-2-pyrrolidone.

3. A processing aid as claimed in claim 1, further including a thermal stabilizer present in an amount of from about 0,25 % to about 5 % by weight.

4. A processing aid as claimed in claim 1, wherein said solvent is present in an amount sufficient to lower the glass transition temperature of said polyimide upon processing of said polyimide.

5. A processing aid as claimed in claim 4, wherein said amount of solvent is from about 1 % to about 10 % by weight.

6. A method of preparing polyimide polymers for melt processing comprising combining said polyimide polymer with a pyrrolidone based solvent in an amount sufficient to lower the glass transition temperature of said polyimide polymer, said pyrrolidone based solvent having a boiling point of at least about 250° C.

7. A method as claimed in claim 6, wherein said solvent is N-cyclohexyl-2-pyrrolidone.

8. A method as claimed in claim 6, wherein a thermal stabilizer is combined with said polyimide and said solvent.

9. A method as claimed in claim 8, wherein said thermal stabilizer is of a type which is a member of the group consisting of amines, phosphites and phenolics.

10. A method as claimed in claim 8, wherein said thermal stabilizer is present in an amount of from

0148719

about 0,25 % to about 5 % by weight.

11.  A method as claimed in claim  6, wherein said solvent is present in an amount of from about 1 % to about 10 % by weight.

0148719

European Patent Office

**EUROPEAN SEARCH REPORT**

Application number

EP 84 63 0172

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 870 674 (W.J.FARRISSEY Jr., et al.)<br><br>* Claims 1,4 *<br><br>----- | 1-11 | C 08 K 5/34<br>C 08 L 79/08 |
| | | | **TECHNICAL FIELDS SEARCHED (Int. Cl.4)** |
| | | | C 08 K<br>C 08 L |

The present search report has been drawn up for all claims

| Place of search | Date of completion of the search | Examiner |
|---|---|---|
| THE HAGUE | 20-02-1985 | HOFFMANN K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82